# DEMANDE DE BREVET EUROPEEN

(11) **EP 1 816 390 A1**
(43) Date de publication de la demande: **08.08.2007**
(21) Numéro de dépôt: 07290133.3
(22) Date de dépôt: 01.02.2007
(51) Int. Cl.: F16M 13/02

(54) **Dispositif de fixation d'un accessoire du type audiovisuel ou informatique, en périphérie d'un support sensiblement plan**

(30) Priorité: 01.02.2006 FR 0600915
(71) Demandeur: Mediaperformances, 92800 Puteaux (FR)
(72) Inventeur: Gerin, Rémy, 92200 Neuilly-sur-Seine (FR)
(74) Mandataire: Breese Derambure Majerowicz

(57) **Abrégé**

L'invention concerne un dispositif de fixation (1) d'un accessoire (2) en périphérie d'un support (3) sensiblement plan, caractérisé en ce qu'il comporte une plaque (6) destinée à supporter l'accessoire (2), ladite plaque support (6) étant pourvue de deux bras de fixation (4, 5) s'étendant dans un plan sensiblement perpendiculaire au plan de ladite plaque support (6), l'un desdits bras (4, 5) au moins étant monté articulé sur ladite plaque support (6) selon un axe perpendiculaire à l'axe longitudinal desdits bras (4 , 5) de sorte à pourvoir être écarté ou rapproché de l'autre bras (5, 4), et en ce qu'il comporte en outre des moyens de réglage (9) de l'écartement desdits bras (4, 5) entre eux comprenant une tige de liaison (10) desdits bras (4, 5), l'une des extrémités de la tige (10) étant solidaire de l'un desdits bras (4, 5), l'autre extrémité étant montée coulissante sur l'autre desdits bras (5, 4).

## Description

La présente invention se rapporte au domaine de la présentation d'informations à des fins publicitaires ou promotionnelles dans des lieux de vente.

La présente invention se rapporte plus particulièrement à un dispositif de fixation d'un accessoire, du type audiovisuel ou informatique, en périphérie d'un support sensiblement plan, ainsi qu'un système de présentation d'informations comprenant un écran vidéo pourvu d'un tel dispositif de fixation.

Dans la présente demande, le terme « accessoire audiovisuel » s'étend également à du matériel purement audio ou vidéo.

Selon une application particulière, la présente invention concerne plus spécifiquement un dispositif permettant la fixation d'un écran vidéo sur une étagère dans un linéaire.

Il est fréquent d'utiliser dans les linéaires de magasins un écran vidéo pour animer des articles en vente par la diffusion de films publicitaires. Lorsque les linéaires comportent des étagères sur lesquelles les articles sont disposés, les écrans vidéo utilisés pour faire la promotion desdits articles sont en général posés directement sur l'une des étagères, de préférence l'étagère supportant les articles à promouvoir.

Le problème qui se pose avec une telle pratique, est que la présence de l'écran vidéo sur une étagère réduit la surface disponible pour stocker les produits.

De même, la pose d'un écran vidéo sur une étagère nécessite qu'une partie des produits disposés sur l'étagère soit déplacée afin de créer un espace suffisant pour recevoir l'écran vidéo en question.

Par ailleurs, afin d'éviter les vols des écrans vidéo disposés sur les étagères, il est nécessaire de les fixer à celles-ci. La fixation est réalisée généralement par vissage des écrans vidéo sur les étagères ayant été préalablement percées.

L'invention vise notamment à résoudre ces problèmes en proposant un dispositif de fixation modulaire permettant la fixation d'un écran vidéo ou tout autre accessoire audiovisuel ou informatique sur tout type d'étagères, quelles que soient la dimension et la forme des étagères, sans gêner la répartition des produits sur celles-ci.

La présente invention vise également à proposer un dispositif permettant une fixation sécurisée des écrans vidéo ou équivalents sur les étagères en évitant l'endommagement de ces dernières.

A cet effet, et selon un premier aspect, l'invention concerne un dispositif de fixation d'un accessoire en périphérie d'un support sensiblement plan, caractérisé en ce qu'il comporte une plaque destinée à supporter l'accessoire, ladite plaque support étant pourvue, de part et d'autre, de deux bras de fixation s'étendant dans un plan sensiblement perpendiculaire au plan de ladite plaque support, l'un desdits bras au moins étant monté articulé sur ladite plaque support selon un axe perpendiculaire à l'axe longitudinal desdits bras de sorte à pourvoir être écarté ou rapproché de l'autre bras de fixation, et en ce qu'il comporte en outre des moyens de réglage de l'écartement desdits bras entre eux comprenant une tige de liaison desdits bras, l'une des extrémités de la tige de liaison étant solidaire de l'un desdits bras de fixation, l'autre extrémité étant montée coulissante sur l'autre desdits bras.

Selon une configuration préférée de l'invention, la tige de liaison est montée articulée, par l'une de ses extrémités, sur l'un desdits bras de fixation, l'extrémité libre opposée étant montée coulissante sur l'autre bras de fixation, le coulissement de la tige de liaison sur le bras de fixation pouvant être bloqué par des moyens de retenue.

En outre, la tige de liaison est de préférence montée coulissante sur le bras selon un axe perpendiculaire à l'axe du bras.

Afin d'optimiser le réglage de l'écartement, il sera préféré de positionner chacune des extrémités de la tige de liaison sur les bras de fixation correspondant de sorte que la tige de liaison présente une inclinaison, par rapport à la plaque. Ainsi, l'angle d'inclinaison, lors de la fabrication dudit dispositif d'inclinaison, sera fixé en prenant en compte les dimensions du dispositif de fixation, et notamment la longueur des bras de fixation, et l'écartement que l'on souhaite pouvoir obtenir entre lesdits bras. L'angle d'inclinaison fixé présentera avantageusement une valeur comprise entre 6 et 12 degrés pour une longueur de bras comprise entre 20 et 30 centimètres.

Selon une configuration particulière de l'invention, la plaque support comporte des extensions latérales comprenant des moyens de fixation permettant une fixation articulée de l'accessoire sur ladite plaque support.

Avantageusement, les moyens de fixation forment une rotule. Ainsi, il est permis de régler l'orientation de l'accessoire suivant l'axe de la rotule choisie. En particulier, lorsque l'accessoire est un écran vidéo, il sera particulièrement avantageux de choisir une rotule permettant de régler l'orientation de haut en bas, et inversement, de l'écran vidéo par rapport à la plaque support.

Selon une configuration préférée de l'invention, l'accessoire est fixé sur le dispositif de fixation au moyen d'une plaque intermédiaire montée articulée sur ladite plaque support.

Il peut être également prévu la possibilité de régler la position en hauteur de l'accessoire par rapport au support. Pour ce faire, la plaque support ou la plaque intermédiaire pourra comporter des moyens permettant de régler en hauteur la position de la plaque intermédiaire et/ou de la plaque support, et/ou de l'accessoire sur le dispositif de fixation.

Avantageusement, l'extrémité libre de chacun desdits bras de fixation est pourvue d'un pied de maintien monté articulé.

Avantageusement, les bras de fixation ont une forme courbée, ce qui permet de fixer le dispositif de fixation sur les étagères en ne gênant pas les installations déjà positionnées sur le bord des étagères, de type néons, affichettes, etc.

Selon un deuxième aspect, l'invention concerne un système de présentation d'information dans un linéaire, du type comprenant un écran vidéo fixé sur un dispositif de fixation tel que décrit précédemment.

D'autres objets et avantages de l'invention apparaîtront au cours de la description qui suit, faite en référence aux dessins annexés, dans lesquels :
- la figure 1 illustre une vue en perspective d'un dispositif de fixation selon l'invention ;
- la figure 2 illustre une autre vue en perspective du dispositif de fixation de la figure 1, ledit dispositif de fixation étant pourvu d'un écran vidéo ;
- la figure 3 est une représentation schématique du dispositif de fixation de la figure 2 disposé sur un support, le réglage de l'écartement n'ayant pas été réalisé.

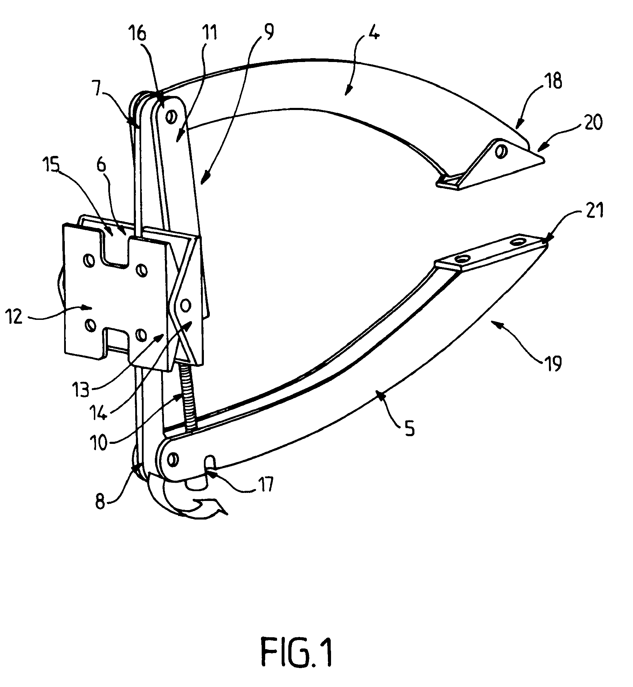

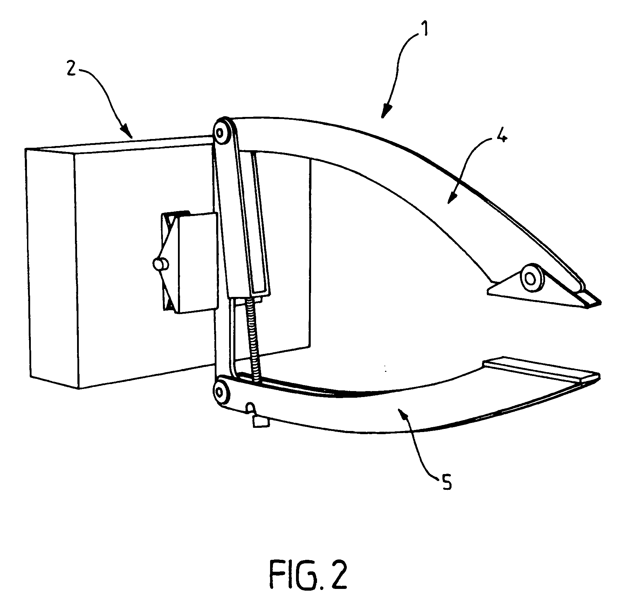

En relation avec les figures 1 à 3, il est décrit un dispositif de fixation 1 permettant de fixer un accessoire 2 en périphérie d'un support 3 sensiblement plan.

Dans le mode de réalisation décrit, l'accessoire est constitué par un écran vidéo. L'écran vidéo sera noté sous la même référence que celle donnée à l'accessoire (référence 2). Il est bien entendu évident que le dispositif de fixation objet de l'invention ne se limite pas à la fixation sur un support d'un tel accessoire. Par ailleurs, le support 3 sur lequel le dispositif de fixation 1 est destiné à être fixé est un support plan, de préférence horizontal.

Le dispositif de fixation 1, du type élément formant pince, comprend, outre des bras de fixation 4 et 5, une pièce destinée à supporter l'écran vidéo. Ladite pièce est formée par une plaque 6 rigide.

Deux des bords opposés de ladite plaque support 6, les bords supérieur et inférieur, sont chacun pourvus d'un des bras de fixation. On parlera, par analogie aux bords, du bras de fixation supérieur 4 et du bras de fixation inférieur 5. Avantageusement, les bras 4 et 5 sont symétriques.

Dans le mode de réalisation représenté, les bords supérieur et inférieur présentent respectivement un prolongement : prolongements supérieur 7 et inférieur 8. A l'extrémité de ces prolongements 7 et 8 sont fixés respectivement les bras de fixation supérieur 4 et inférieur 5.

Selon une configuration particulièrement avantageuse de l'invention, la plaque 6 et les prolongements 7 et 8 présentent des dimensions telles que les bras de fixation 4 et 5 présentent, l'un par rapport à l'autre, un écartement supérieur à l'épaisseur du support sur lequel ledit dispositif de fixation 1 est destiné à être fixé.

Un tel écartement permet ainsi de s'affranchir d'un éventuel rebord, porte-étiquette ou autre élément situé à l'avant du support 3.

En outre, les bras définiront, avec cet écartement et une longueur déterminée, un espacement permettant la mise en place de produits sur la partie du support 3 délimitée entre le bord du support et les extrémités libre des bras de fixation 4 et 5.

Selon une configuration avantageuse de l'invention, les bras de fixation 4 et 5 ont une forme courbée, l'extrémité libre de chaque bras de fixation étant sensiblement dirigée vers l'extrémité libre de l'autre bras de fixation.

Dans le mode de réalisation décrit, l'écran vidéo 2 est fixé sur la plaque 6 au moyen d'une pièce intermédiaire 12. La pièce intermédiaire 12 consiste également en une plaque rigide, de dimensions sensiblement identique à la plaque 6. Afin de faciliter la lecture de ce qui suit, on parlera de plaque support 6 et de plaque intermédiaire 12.

Avantageusement, les bords latéraux de la plaque intermédiaire 12 et de la plaque support 6 sont respectivement pourvus d'extensions 13, 14 latérales, s'étendant sensiblement perpendiculairement auxdites plaques 12 et 6. Ainsi, la plaque intermédiaire 12 est fixée sur la plaque support 6 en fixant les extensions latérales 13 de la plaque intermédiaire 12 sur les extensions latérales 14 de la plaque support 6.

Par ailleurs, afin de permettre le logement du câble d'alimentation disposé, de préférence, à l'arrière de l'écran vidéo 2, mais également d'offrir un espace suffisant pour la ventilation des composant électroniques constituant l'écran vidéo 2, ainsi que de permettre à l'écran vidéo de disposer d'une amplitude de pivot suffisante, la longueur des extensions latérales 13 et 14 de chacune des plaques 12 et 6, ainsi que l'emplacement de la fixation des plaques entre elles, sont choisis de sorte qu'un espacement 15 soit conservé entre ladite plaque intermédiaire 12 et ladite plaque support 6.

Avantageusement, les extensions 13 et 14 présentent une forme triangulaire.

Selon un mode de réalisation préféré de l'invention, la fixation de la plaque intermédiaire 12 sur la plaque support 6 est formée par une charnière, permettant une articulation autour d'un axe transversal auxdites plaques 12 et 6. Ainsi, dans le mode de réalisation décrit, l'écran vidéo 2 porté par la plaque intermédiaire 12 pivote de bas en haut par rapport à la plaque support 6.

Il pourra être également prévu, selon une configuration avantageuse de l'invention, la possibilité de régler la position en hauteur de l'écran vidéo 2 par rapport au support 3. Ainsi, la plaque support 6 et/ou la plaque intermédiaire 12 pourront comporter des moyens permettant de faire coulisser vers le haut et/ou le bas selon l'axe formé par les prolongements supérieur 7 ou inférieur 8 de la plaque support 6, la plaque intermédiaire 12 sur la plaque support 6, ou l'écran vidéo 2 sur la plaque intermédiaire 12.

Afin d'autoriser l'écartement ou le rapprochement des bras de fixation 4 et 5 entre eux, l'un desdits bras de fixation au moins est monté articulé sur la plaque support 6. Dans le mode de réalisation illustré, l'écartement ou le rapprochement desdits bras de fixation 4 et 5 est réalisé par l'intermédiaire du bras inférieur 5 lequel est monté articulé sur le prolongement inférieur 8 de la plaque support 6, le bras de fixation 4 étant monté fixe sur le prolongement supérieur 7 de ladite plaque support 6.

L'écartement (ou le rapprochement) du bras de fixation 5 inférieur par rapport au bras de fixation supérieur 4 est effectué par des moyens de réglage 9 comprenant une tige de liaison 10 desdits bras de fixation 4 et 5.

Avantageusement, la tige de liaison 10 est solidaire du bras de fixation fixe par rapport à la plaque support 6 (dans le mode de réalisation décrit, bras de fixation supérieur 4). Plus spécifiquement, l'une des extrémités 16 de la tige de liaison 10 est montée articulée, par l'intermédiaire d'un étrier 11, sur le bras de fixation supérieur 4, au voisinage du prolongement supérieur de la plaque 6. L'autre extrémité 17 de la tige de liaison 10, quant à elle, est montée coulissante sur le bras de fixation inférieur 5 selon un axe perpendiculaire à l'axe dudit bras 5 (cf. mouvement indiqué par la flèche).

Aussi, et afin d'optimiser le réglage de l'écartement des bras de fixation 4 et 5 entre eux tout en offrant un champ de profondeur suffisant pour permettre une fixation correcte du dispositif de fixation 1 sur le support 3, la tige de liaison 10 présente une inclinaison par rapport à la plaque support 6 de l'ordre de 8 degrés, pour un champ de profondeur P de l'ordre de 24 centimètres. Par champ de profondeur, on entend l'espace disponible maximal entre la tige de liaison et l'extrémité libre des bras de fixation 4 et 5, lequel espace caractérise la profondeur maximale du support 3 maintenue entre les bras de fixation 4 et 5.

Lorsque l'écartement souhaité entre les bras de fixation 4 et 5 est atteint, le coulissement de la tige de liaison 10, et donc le mouvement du bras de fixation inférieur 5, est bloqué par un moyen de retenue. Dans le mode de réalisation décrit, le moyen de retenue est avantageusement constitué par une tête cylindrique six pans creux au niveau de l'extrémité 17 libre de la tige de liaison 10, la tête cylindrique six pans creux étant soudée à l'extrémité de la tige de liaison 10. On verra plus loin que cette même tête cylindrique permet d'actionner également l'écartement ou le rapprochement du bras inférieur 5 du bras supérieur 4.

Par ailleurs, et avantageusement, les extrémités libres 18, 19 de chacun desdits bras de fixation 4 et 5 sont pourvues d'un pied 20 et 21, de préférence articulé (représenté uniquement pour le pied 20). Ainsi, lorsque lesdits bras de fixation 4 et 5 sont disposés de part et d'autre du support 3, le contact entre les bras de fixation 4 et 5 et la surface du support 3 peut être ajusté du fait de l'articulation des pieds 20 et 21.

De même, afin d'éviter d'éventuellement détériorations du support liées à la fixation du dispositif de fixation 1 sur le support 3, ainsi que tout risque de glissement dudit dispositif de fixation 1 équipé de l'écran vidéo 2 sur le support 3, il pourra être avantageux de prévoir un dispositif de fixation 1 comportant des patins d'adhérence. De tels patins d'adhérence seront avantageusement disposés sur une ou plusieurs parties du dispositif de fixation 1 destinée(s) à être en contact avec ledit support 3. Il sera en particulier avantageux de prévoir des patins d'adhérence au niveau des extrémités libres des bras de fixation 4 et 5, et plus particulièrement sous leurs pieds 20 et 21.

Par ailleurs, en complément avec le réglage de l'écartement des bras de fixation 4 et 5 entre eux, et leur ajustement au support 3 autour duquel ils sont disposés, il pourra être également prévu des moyens de serrage permettant d'ajuster le serrage desdits bras de fixation autour dudit support 3 (non représenté). Lesdits moyens de serrage pourront, par exemple, être constitués par une tige filetée traversant l'extrémité libre (ou le pied) du bras de fixation inférieur 5. L'extrémité débouchant dans l'espacement formé entre les extrémités libres (ou les pieds) desdits bras de fixation 4 et 5 pourra avantageusement être pourvue d'un embout de protection de sorte à protéger le support lors du serrage de la tige filetée au moyen de la tête cylindrique.

La mise en place d'un écran vidéo sur le bord d'une étagère dans un linéaire s'effectue comme suit.

On dispose le dispositif de fixation 1 sur le support 3 en positionnant le bras de fixation supérieur 4 sur le support 3 et le bras de fixation inférieur 5 sous le support 3. On fait alors glisser transversalement le dispositif de fixation 1 sur le support 3, le bras de fixation supérieur 4 reposant sur le support 3, avantageusement jusqu'à ce que la tige de liaison 10 vienne en butée contre la périphérie du support 3, le dispositif de fixation pouvant également être fixé sur le support 3 sans que la tige de liaison soit directement en contact contre le rebord du support 3.

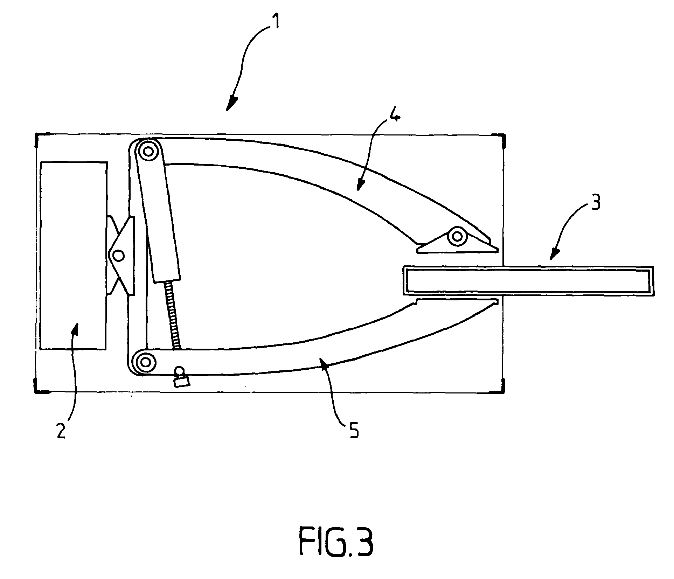

Une fois le dispositif de fixation 1 disposé sur le support 3 à l'emplacement souhaité, on procède au réglage de l'écartement des bras de fixation 4 et 5 entre eux. Comme illustré sur la figure 3, préalablement au réglage de l'écartement, le bras de fixation supérieur 4 repose, par son extrémité libre 18 (ou le pied 20), sur le support 3. Le rapprochement du bras inférieur 5 (ou la diminution de l'écartement du bras inférieur 5) en direction du bras supérieur 4, et donc vers le support 3, est réalisé en agissant sur la tête cylindrique six pans creux disposée à l'extrémité 17 filetée de la tige de liaison 10 et retenant le bras de fixation 5. Ainsi, en tournant la tête cylindrique six pans creux dans le sens des aiguilles d'une montre, celui-ci « remonte » le long de la tige de liaison 10 filetée en direction de l'autre extrémité 16 solidaire au bras supérieur 4. Le serrage de la tête cylindrique six pans creux, entraîne, dans son déplacement, le pivotement du bras de fixation inférieur 5 en direction du support 3. Cette action est effectuée jusqu'à ce que l'extrémité libre 19 (ou le pied 21) du bras inférieur 5 vienne au contact de la surface inférieure du support 3. Au cours du rapprochement du bras inférieur 5 du support 3, le bras inférieur 5 effectue une légère avancée par rapport audit bras supérieur 4.

Le bras de fixation inférieur 5, en combinaison avec le bras de fixation supérieur 4, devant exercer sur le support 3 une force de pincement suffisamment grande pour retenir l'écran vidéo contre le support 3, il sera avantageux de pouvoir procéder à un ajustage du serrage des extrémités libres 18 et 19 des bras de fixation en contact avec le support 3 à l'aide de moyens de serrage additionnels disposés sur l'extrémité libre du bras inférieur 5 (non représenté).

L'écran vidéo 2 sera fixé préalablement à ou après la pose du dispositif de fixation 1 sur le support 3.

Le retrait dudit dispositif de fixation 1 du support 3 sera réalisé en effectuant un desserrage progressif puis écartement desdits bras de fixation 4 et 5 du support 3, en opérant de manière inverse à celle décrite précédemment.

L'invention est décrite dans ce qui précède à titre d'exemple. Il est entendu que l'homme du métier est à même de réaliser différentes variantes de l'invention sans pour autant sortir de l'invention.

## Revendications

1. Dispositif de fixation (1) d'un accessoire (2) en périphérie d'un support (3) sensiblement plan, **caractérisé en ce qu'**il comporte une plaque (6) destinée à supporter l'accessoire (2), ladite plaque support (6) comportant, sur deux bords opposés, un bras de fixation (4, 5), l'un desdits bras (4, 5) au moins étant monté articulé sur ladite plaque support (6) selon un axe perpendiculaire à l'axe longitudinal desdits bras (4 , 5) de sorte à pourvoir être écarté ou rapproché de l'autre bras de fixation (5, 4), et **en ce qu'**il comporte en outre des moyens de réglage (9) de l'écartement desdits bras (4, 5) entre eux comprenant une tige de liaison (10) desdits bras (4, 5), l'une des extrémités de la tige de liaison (10) étant solidaire de l'un desdits bras de fixation (4, 5), l'autre extrémité étant montée coulissante sur l'autre desdits bras (5, 4).

2. Dispositif de fixation (1) selon la revendication 1, **caractérisé en ce que** la tige de liaison (10) est montée coulissante sur le bras (5) selon un axe perpendiculaire à l'axe du bras.

3. Dispositif de fixation (1) selon la revendication 1 ou la revendication 2, **caractérisé en ce que** la tige est montée articulée, par l'une de ses extrémités, sur l'un desdits bras de fixation (4, 5), l'extrémité libre opposée étant montée coulissante sur l'autre bras de fixation (5, 4), le coulissement de la tige de liaison sur le bras de fixation (5, 4) pouvant être bloqué par des moyens de retenue.

4. Dispositif de fixation (1) selon l'une quelconque des revendications précédentes, **caractérisé en ce que** la tige de liaison (10) est inclinée, par rapport à la plaque (6), selon un angle entre 6 et 12 degrés, pour une longueur de bras (4, 5) comprise entre 20 et 30 centimètres.

5. Dispositif de fixation (1) selon l'une quelconque des revendications précédentes, **caractérisé en ce que** la plaque support (6) comporte des extensions latérales (14) comprenant des moyens de fixation permettant une fixation articulée de l'accessoire sur ladite plaque support (6).

6. Dispositif de fixation (1) selon l'une quelconque des revendications précédentes, **caractérisé en ce que** l'accessoire est fixé sur le dispositif de fixation (1) au moyen d'une plaque intermédiaire (12) montée articulée sur ladite plaque support (6).

7. Dispositif de fixation (1) selon l'une quelconque des revendications précédentes, **caractérisé en ce que** la plaque support (6) ou la plaque intermédiaire (12) comporte des moyens permettant de régler en hauteur la position de la plaque support et/ou de la plaque intermédiaire et/ou de l'accessoire sur le dispositif de fixation.

8. Dispositif de fixation (1) selon l'une quelconque des revendications précédentes, **caractérisé en ce que** l'extrémité libre (18, 19) de chacun desdits bras de fixation (4, 5) est pourvue d'au moins un pied de maintien monté articulé.

9. Dispositif de fixation (1) selon l'une quelconque des revendications précédentes, **caractérisé en ce que** les bras de fixation (4, 5) ont une forme courbée.

10. Système de présentation d'information dans un linéaire, du type comprenant un écran vidéo fixé sur un dispositif de fixation (1) selon l'une quelconque des revendications précédentes.
